# FASCICULE DE BREVET EUROPEEN

(11) **EP 2 099 630 B1**
(45) Date de publication et mention de la délivrance du brevet: **07.12.2016**
(21) Numéro de dépôt: 07871930.9
(22) Date de dépôt: 13.12.2007
(51) Int. Cl.: B60K 6/485

(54) **ACCOUPLEMENT ENTRE LE MOTEUR THERMIQUE ET LE COMPRESSEUR DE CLIMATISATION D'UN VEHICULE AUTOMOBILE**
KOPPLUNG ZWISCHEN DEM WÄRMEMOTOR UND DEM KLIMAANLAGEN-KOMPRESSOR EINES AUTOMOBILFAHRZEUGS
COUPLING BETWEEN THE THERMAL ENGINE AND THE AIR CONDITIONING COMPRESSOR OF AN AUTOMOTIVE VEHICLE

(30) Priorité: 15.12.2006 FR 0655557
(43) Date de publication de la demande: 16.09.2009
(73) Titulaire: Valeo Equipements Electriques Moteur, 94046 Créteil Cedex (FR)
(72) Inventeur: VASILESCU, Claudiu, 75020 Paris (FR)
(74) Mandataire: de Lambilly Delorme, Marie Pierre
(86) Numéro de dépôt international: PCT/FR2007/052507
(87) Numéro de publication internationale: WO 2008/078047

(56) Documents cités:
- US-A- 5 755 303
- US-A1- 2003 094 317
- US-A1- 2003 116 368
- US-A1- 2004 116 227
- US-B1- 6 668 953
- US-B1- 6 745 117
- TOMOYUKI HANYU, HI.IWANO, H. OOBA, S. KAMADA, Y. KOSAKA, S. KOMIYAMA, K. TAKEDA: "A Study of the Power Transfer Systems for HEVs" 2006 SAE WORLD CONGRESS, no. 2006-01-0668, 4 mars 2006 (2006-03-04), XP002493489 ADVANCED HYBRID VEHICLE POWERTRAINS 2006

## Description

La présente invention est relative aux ensembles d'accouplement pour véhicules à moteur thermique ayant une unité de climatisation et plus particulièrement les véhicules équipés d'un système d'arrêt de type micro hybride qui arrête le moteur thermique lors des arrêts du véhicule comme par exemple un système de type "Stop & Start™".

Plus particulièrement, l'invention concerne un ensemble d'accouplement pour un véhicule automobile comprenant un moteur thermique et un compresseur d'une unité de climatisation dudit véhicule. Un tel ensemble d'accouplement peut faire partie de l'ensemble moteur du véhicule.

Dans un ensemble moteur de type connu, le compresseur d'une unité de climatisation embarquée est entraîné en rotation par le moteur thermique. Cependant, un tel accouplement crée une surconsommation de carburant, pouvant atteindre 30%, et provoquant le rejet d'une plus grande quantité de gaz polluants (NOx, CO, etc...). De plus, le compresseur ne peut être entraîné en rotation à plus de 9000 tours/minute, ce qui impose des contraintes concernant le rapport de réduction de l'accouplement.

D'autre part, il est connu d'utiliser un moteur électrique dédié à l'entraînement commandé du compresseur et alimenté par la batterie du véhicule. Cependant, le compresseur nécessite une puissance avoisinant 3kW, ce qui est une charge élevée pour la batterie et pose des problèmes de fonctionnement, en particulier au démarrage de la climatisation, lorsque la puissance requise est élevée.

D'autre part, les véhicules équipés d'un "Stop & Start™" coupent le moteur thermique lors des arrêts (feux rouges, stops, etc...), ce qui interdit tout utilisation du moteur thermique à ces moments là et donc de la climatisation si celle-ci dépend d'un compresseur relié au moteur thermique.

US 2004/116227 décrit un ensemble d'accouplement pour véhicules selon le préambule de la revendication 1 et un procédé de commande selon la revendication 9.

La présente invention a notamment pour but de pallier ces inconvénients de l'état de la technique.

A cet effet, la présente invention propose un ensemble d'accouplement entre le moteur thermique et le compresseur de climatisation permettant de diminuer la consommation de carburant et donc le rejet de gaz polluants, tout en assurant un fonctionnement optimal du compresseur notamment pendant les phases d'arrêt du moteur thermique. En particulier lorsque l'habitacle est déjà climatisé par le climatiseur. Le moteur électrique peut également venir en complément d'autres dispositifs de climatisation, comme par exemple ceux de types passifs qui constituent une réserve de froid que l'on relâche quand le moteur thermique est arrêté.

Ainsi, un premier aspect de l'invention se rapporte à un ensemble d'accouplement entre un moteur thermique et un compresseur d'une unité de climatisation d'un véhicule automobile, comprenant :
- une machine électrique tournante pouvant fonctionner en mode moteur;
- des premiers moyens d'accouplement débrayables adaptés pour coupler le compresseur au moteur thermique ; et,
- des seconds moyens d'accouplement adaptés pour coupler le compresseur à la machine électrique tournante.

Grâce à ces dispositions, on peut assurer l'entraînement du compresseur de manière hybride, c'est-à-dire sélectivement par le moteur thermique ou par la machine électrique tournante indépendamment l'un de l'autre, de telle sorte que la consommation de carburant et les émissions polluantes soient diminuées et que le compresseur soit actionné par le moteur électrique quand le moteur est arrêté.

Le moteur électrique peut être de faible puissance, soit inférieure à 1,5 kW, comme par exemple 500W à 1kW, puisqu'il ne fonctionne que lors de l'arrêt du moteur thermique, pendant lequel il ne doit fournir qu'environ 1 kW pendant environ 2mn.

Dans divers modes de réalisation de l'ensemble moteur selon l'invention, on peut éventuellement avoir recours en outre à une ou plusieurs des dispositions suivantes :
- les premiers et les seconds moyens d'accouplement débrayables étant commandables de manière indépendante ; il est ainsi possible de basculer l'entraînement en rotation du compresseur du moteur thermique vers le moteur électrique et réciproquement pour maintenir une température de l'habitacle déjà climatisé à un niveau de confort suffisant pendant un temps suffisant.
- la machine électrique tournante est adaptée pour fonctionner en mode moteur et fournir une énergie mécanique au moteur thermique adaptée pour démarrer le moteur thermique; Le moteur électrique est un démarreur.

Un entraînement électrique dédié n'est plus nécessaire, ce qui permet de gagner de l'espace dans le compartiment moteur, et de diminuer les coûts de l'unité de climatisation.
- la machine électrique tournante est adaptée pour fonctionner, en outre, en mode générateur pour transformer une puissance mécanique fournie par le moteur thermique en une puissance électrique; le moteur électrique est un alterno-démarreur.
- la machine électrique tournante est adaptée pour être disposée de manière accolée à l'unité de climatisation du véhicule ;
- la machine électrique tournante est adaptée pour être couplée au moteur thermique par l'intermédiaire d'une unité de transmission ;
- la machine électrique tournante est adaptée pour être reliée au compresseur par l'intermédiaire d'une unité de transmission ;
- l'unité de transmission comprend au moins l'un des dispositifs suivants : un train épicycloïdal, une transmission à rapport de réduction fixe, une transmission à rapport de réduction continuellement variable, une boîte de vitesses ;
- l'unité de transmission est un train épicycloïdal, comprenant une couronne dentée, un engrenage soleil et des engrenages satellites reliés à un arbre de sortie, la couronne dentée formant un rotor de la machine électrique tournante, l'engrenage soleil étant adapté pour être relié mécaniquement au compresseur.

Un second aspect de la présente invention concerne un ensemble moteur pour un véhicule ayant un moteur thermique et une unité de climatisation avec un compresseur, comprenant une unité d'accouplement selon l'une le premier aspect, pour l'accouplement entre ledit moteur thermique et ledit compresseur.

Un troisième aspect de la présente invention concerne encore un procédé de commande d'un ensemble moteur pour un véhicule à moteur thermique comprenant :
- un moteur thermique pour l'entraînement du véhicule ;
- une machine électrique tournante et,
- un compresseur d'une unité de climatisation du véhicule.

Le procédé comprend :
- un premier mode de fonctionnement, dans lequel le moteur thermique fournit une puissance mécanique au compresseur; et
- un deuxième mode de fonctionnement dans lequel la machine électrique tournante, fonctionnant en mode moteur, fournit une puissance mécanique au compresseur de manière mécaniquement indépendante du moteur thermique. Ce deuxième mode de fonctionnement est utilisé quand le véhicule est arrêté, le moteur thermique en position stop.

Dans un mode de mise en oeuvre, le procédé comprend les étapes successives consistant à :
(a) fournir une puissance mécanique à partir de la machine électrique tournante au moteur thermique pour démarrer le moteur thermique au moyen de la machine électrique tournante qui est couplée mécaniquement au moteur thermique;
(b) fournir une puissance mécanique à partir du moteur thermique au compresseur;
(c) fournir une puissance mécanique uniquement à partir de la machine électrique tournante au compresseur, en phase de stop du moteur thermique.

Grâce à ces dispositions, le compresseur peut être entraîné en rotation de manière hybride. Lorsque la puissance requise par le compresseur est importante, c'est-à-dire essentiellement au démarrage du compresseur, le moteur thermique fournit la puissance mécanique nécessaire. Quand le moteur thermique est à l'arrêt, la machine électrique tournante entraîne le compresseur, et permettant le fonctionnement du compresseur.

De préférence, l'étape (c) est répétée successivement sur des plages d'une première durée, lesdites plages étant espacées d'une seconde durée sensiblement supérieure à la première durée.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est une représentation schématique d'un ensemble moteur selon un premier mode de réalisation conforme à l'invention ;
- la figure 2 est un organigramme représentant un procédé de commande conforme à l'invention ;
- la figure 3 est une représentation schématique d'un ensemble moteur selon un deuxième mode de réalisation conforme à l'invention ;

- la figure 4 est un graphique représentant l'évolution des vitesses de rotation des éléments de l'ensemble moteur du deuxième mode de réalisation ;
- la figure 5 est une représentation schématique d'un ensemble moteur selon un troisième mode de réalisation conforme à l'invention ; et
- la figure 6 est une représentation schématique d'un ensemble moteur selon un quatrième mode de réalisation conforme à l'invention; et,
- la figure 7 est une représentation schématique d'un ensemble moteur selon un cinquième mode de réalisation conforme à l'invention; et,
- la figure 8 est une représentation schématique d'un ensemble moteur selon un sixième mode de réalisation.

Sur les différentes figures, les mêmes références désignent des éléments identiques ou similaires.

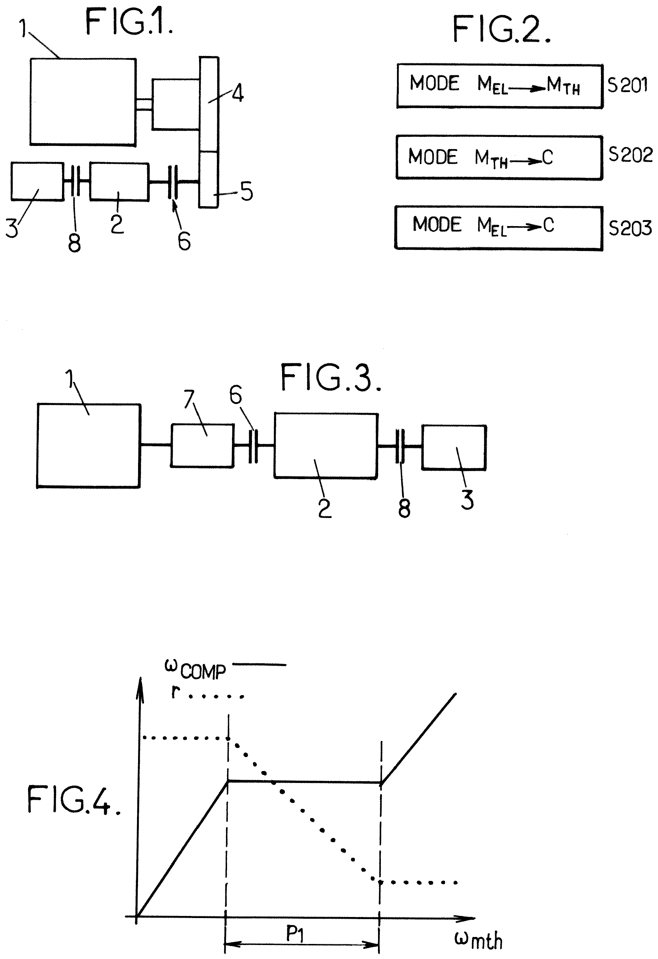

La figure 1 représente de manière schématique un ensemble d'accouplement entre un moteur thermique 1 équipé d'un système de type micro hybride comme par exemple un système "Stop & Start™", et un compresseur 3 d'une unité de climatisation (non représentée) d'un véhicule climatisé, conformément à un premier mode de réalisation de l'invention. Cet ensemble d'accouplement comprend une machine électrique tournante 2.

La machine électrique 2 est couplée mécaniquement au compresseur 3, pour entraîner la roue ou le plateau (pistons) de compression par un dispositif d'accouplement approprié. De préférence, le dispositif d'accouplement 8 est débrayable, afin de permettre de désolidariser la machine électrique 2 du compresseur 3 de façon commandée.

Elle est aussi couplée mécaniquement au moteur thermique par exemple au moyen d'un pignon 5 engrenant sur un vilebrequin 4 du moteur thermique 1. La machine électrique 2 est plus particulièrement couplée au pignon par l'intermédiaire d'un dispositif d'accouplement débrayable 6, permettant de désolidariser la machine électrique 2 du moteur thermique 1 de façon commandée.

Lorsque les moyens d'accouplement 8 sont débrayables, ces moyens et les moyens d'accouplement 6 peuvent être commandés dans l'état ouvert (i.e., dans l'état débrayé) ou dans l'état fermé (i.e., dans l'état embrayé) de manière indépendante.

Avantageusement, la machine électrique 2 peut être un démarreur adapté pour démarrer du moteur thermique 1. Ainsi, on supprime un entraînement dédié pour le compresseur 3. De plus, le démarreur est un composant qui, selon les techniques conventionnelles, n'est utilisé que lors de la phase de démarrage du véhicule, puis n'est plus utilisé. Ce mode de réalisation repose donc une plus grande utilisation d'un composant qui existe déjà en étant sous-utilisé. Il peut donc être mis en oeuvre sans surcoût.

En variante, il est possible que la machine électrique 2 soit une machine tournante pouvant fonctionner en mode moteur et pouvant en outre fonctionner en mode générateur (ou mode alternateur), par exemple pour récupérer de l'énergie lors du freinage du véhicule, ou pour recharger la batterie. Une telle machine est connue sous l'appellation d'alterno-démarreur.

Le fonctionnement de l'ensemble d'accouplement selon le premier mode de réalisation est illustré par l'organigramme de la figure 2.

Dans une première phase de fonctionnement, le moteur électrique 2 est utilisé pour démarrer le moteur thermique 1, à l'étape S201 (MODE M_{EL} -> M_{TH}). Dans cette phase, le moteur électrique 2 fournit une énergie (puissance) mécanique au moteur thermique 1, à travers le dispositif 6 qui est fermé.

Une fois le moteur thermique 1 démarré, celui-ci fournit une puissance mécanique au compresseur 3 pour refroidir le véhicule, à l'étape S202 (MODE M_{TH} -> C), à travers le dispositif 6 qui est fermé, le moteur électrique 2 et le dispositif 8 (qui est alors fermé, lorsqu'il est débrayable). La puissance du moteur thermique 1 est suffisante pour alimenter le compresseur 3 dans cette phase, où, comme vu précédemment, la puissance requise est maximale.

Puis, soit au bout d'un temps prédéterminé, soit lorsque le véhicule a été assez refroidi par l'unité de climatisation, on passe dans un mode d'entraînement électrique du compresseur, à l'étape S203. Pour cela, le dispositif d'accouplement 6 est ouvert, désolidarisant l'arbre du moteur électrique du pignon 5. Dans cette étape qui a lieu en général en phase de roulage du véhicule, c'est-à-dire lorsque le véhicule roule, la puissance mécanique nécessaire au fonctionnement du compresseur est fournie par le moteur électrique 2 (MODE M_{EL} -> C). En tout cas elle n'intervient pas au moment du démarrage du véhicule, qui est critique comme indiqué en introduction.

Cette puissance peut en outre être fournie par à-coups successifs, c'est-à-dire par une suite de périodes de courtes de durée pour ajuster la température dans l'habitacle. Ce mode de fonctionnement est particulièrement adapté pour un moteur électrique de type démarreur, puisqu'il s'agit d'un moteur électrique ne pouvant, par conception, supporter que des courtes phases de fonctionnement.

Le dispositif d'accouplement 8 reliant le compresseur 3 au moteur électrique 2 n'est pas forcément débrayable. Néanmoins, un dispositif débrayable permet notamment de ne pas entraîner en rotation le compresseur dans le cas où la machine électrique 2 est utilisée en mode moteur pour fournir une puissance mécanique au moteur thermique 1 pendant les phases de roulage (par exemple dans le cas d'une voiture hybride, c'est-à-dire entraîné sélectivement par un moteur thermique ou un moteur électrique), ou en mode générateur pour produire de l'énergie électrique à partir de l'énergie mécanique fournie par le moteur thermique 1 (par exemple lorsque la machine électrique est un alternateur ou un alterno-démarreur).

Les différents modes de fonctionnement sont établis grâce au dispositif d'accouplement 6 et au dispositif d'accouplement 8 (lorsqu'il est débrayable), respectivement arrangés entre le moteur thermique 1 et la machine électrique 2, et entre la machine électrique 2 et le compresseur 3. Ainsi, pour un fonctionnement en mode démarreur ou en mode moteur (pour un véhicule hybride), l'accouplement 6 est fermé, l'accouplement 8 est éventuellement ouvert, en fonction des besoins en climatisation. En mode alternateur, de même, l'accouplement 6 est fermé et l'accouplement 8 est éventuellement ouvert, selon les besoins. En mode climatisation seule, l'accouplement 6 est ouvert et l'accouplement 8 est fermé.

Par ailleurs, la machine électrique 2 peut être disposée de manière accolée à l'unité de climatisation, ou au compresseur 3. De cette manière, elle est refroidie avec le gaz du compresseur ou avec l'évaporateur de l'unité de climatisation qui absorbe la chaleur et produit du froid.

Dans les deux cas, on assure ainsi un refroidissement efficace de la machine électrique 2, ce qui permet de faire fonctionner une machine électrique de type démarreur pendant des périodes de fonctionnement plus longues.

Comme illustré sur la figure 3, un ensemble d'accouplement conforme à un deuxième mode de réalisation comprend en outre une unité de transmission 7, comme par exemple une unité de transmission à rapport de réduction variable continûment (ou CVT pour « Continuously Variable Transmission » en anglais), reliant le moteur thermique 1 à la machine électrique 2. On appellera r le rapport de réduction. On peut ainsi adapter la vitesse de rotation des différents éléments en cours de fonctionnement. En effet, lorsque le moteur thermique 1 fournit une puissance mécanique au compresseur 3 via la machine électrique 2, le régime du moteur peut être modifié en fonction de la conduite. On peut néanmoins adapter le rapport de réduction de l'unité CVT pour maintenir le fonctionnement du compresseur autour d'un point de fonctionnement souhaité.

Comme illustré à la figure 4, le rapport r peut être adapté sur une plage déterminée de fonctionnement P1 de vitesse angulaire du moteur thermique 1 ωₘₜₕ de façon à maintenir une vitesse de rotation du compresseur ω_{COMP} constante, indépendamment des variations du régime du moteur thermique 1. On peut ainsi respecter un point de fonctionnement optimal du compresseur, en fonction par exemple d'une consigne en température de l'unité de climatisation.

Lorsque que l'unité CVT est placée entre le moteur thermique 1 et la machine électrique 2, il a été constaté une diminution de la consommation de 1,5% par rapport aux techniques conventionnelles. A cet effet, on peut utiliser tout type d'unité CVT, comme des unités CVT à poulie, toroïdales, ou encore à crochets.

A la place de l'unité CVT, il est possible d'employer tout type d'unité de transmission connue, comme un train épicycloïdal, une transmission à rapport de réduction fixe, ou encore une boîte de vitesses.

Selon une variante, l'unité de transmission 7, ici une unité CVT, peut être placée entre la machine électrique 2 et le compresseur 3. Il a été constaté dans cette configuration une réduction de la consommation de l'ordre de 6%.

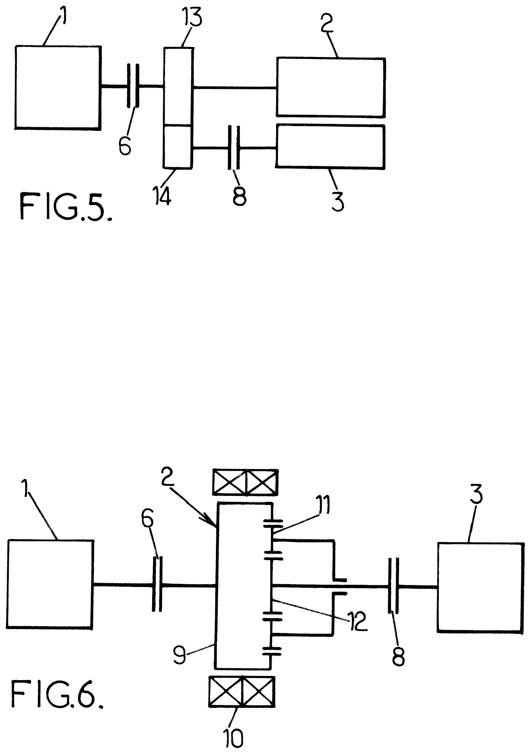

Dans un troisième mode de réalisation illustré par la figure 5, l'arbre de la machine électrique tournante 2 peut être raccordé à un premier pignon 13, et l'arbre du compresseur peut être raccordé par l'intermédiaire du dispositif d'accouplement 8 à un second pignon 14, engrenant sur le premier pignon 13. L'accouplement 6 est interposé entre le moteur thermique 1 et le premier pignon 13. On obtient une structure ayant une architecture plus compacte.

En effet, pour que le moteur fournisse une puissance mécanique au compresseur 3, les deux dispositifs d'accouplement 6 et 8 sont fermés. Lorsque seul la machine électrique 2 fournit de la puissance mécanique au compresseur 3, l'accouplement 6 est ouvert et l'accouplement 8 est fermé.

Par ailleurs, selon un quatrième mode de réalisation de l'invention illustrée à la figure 6, la machine électrique tournante 2 peut être intégrée dans un dispositif d'entraînement tel qu'un train épicycloïdal. Plus particulièrement, la couronne dentée 9 du train épicycloïdal peut former un rotor de la machine électrique tournante 2. Des enroulements 10 de stator sont prévus autour de la couronne dentée 9. Si le stator est alimenté, on peut alors convertir une puissance mécanique en une puissance électrique. Lorsque le moteur thermique 1 doit fournir seul l'énergie mécanique requise par le compresseur 3, aucun courant ne circule dans ces enroulements.

Le train épicycloïdal peut aussi comprendre des engrenages satellitaires 11, coopérant d'une part avec la couronne dentée 9, et d'autre part avec un engrenage soleil 12, qui est alors relié mécaniquement au compresseur 3. Le porte satellite est éventuellement relié au bâti.

Ainsi, on peut former une structure compacte pour l'ensemble d'accouplement, comportant un alterno-démarreur ou un moteur réversible. De plus, la proximité du compresseur 3 permet d'assurer un refroidissement efficace de la machine électrique tournante 2.

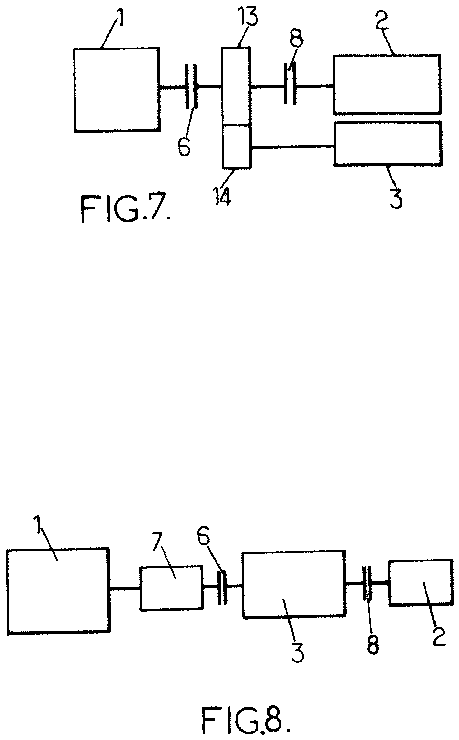

Selon un cinquième mode de réalisation de l'invention, représenté à la figure 7, la machine électrique tournante 2 peut être par exemple un moteur à balais. La machine électrique 2 peut être raccordée à un premier pignon 13 par l'intermédiaire d'un accouplement débrayable 8 et l'arbre du compresseur 3 est raccordé à un second pignon 14. Les deux pignons 13 et 14 peuvent être remplacées par des poulies entraînées par courroies classiques. L'accouplement 6 est interposé entre le moteur thermique 1 et le premier pignon 13. La machine tournante 2 n'est utilisée qu'en phase d'arrêt du moteur thermique 1, elle est débrayée pendant les phases de roulage, le compresseur étant alors entraîné par le moteur thermique 1.

Dans le cas des véhicules équipés d'un alterno-démarreur, la stratégie est la suivante:
- au premier démarrage, la machine électrique 2 est débrayée pendant que le moteur thermique 1 démarre,
   au cours de la phase d'arrêt "Stop" du moteur thermique 1, la machine 2 démarre préférentiellement avant l'arrêt du moteur 1. Ceci afin de ne pas avoir à redémarrer le compresseur 3 qui aurait alors un couple de frottement statique plus élevé que son couple de frottement dynamique. Ce qui permet d'économiser de l'énergie électrique, de ne pas avoir à sur dimensionner la machine 2. La machine 2 ne tourne que le temps prescrit, soit 1 à 2 minutes selon l'état de charge de la batterie ou de l'Ucap qui l'alimente, afin de garder suffisamment d'énergie pour redémarrer le moteur thermique 1. Si la charge devient insuffisante ou si le temps d'arrêt du moteur thermique 1 dépasse le temps prescrit, la machine 2 et le compresseur 3 sont arrêtés (dans ce cas là la climatisation est arrêtée) ou on redémarre le moteur thermique 1 et on arrête la machine 2 (dans ce cas la climatisation reste en marche).
- au redémarrage, on arrête la machine 2 avant le démarrage du moteur thermique 1 afin de pouvoir utiliser l'énergie restante pour le redémarrage du moteur thermique 1. Cependant on pourrait tout à fait arrêter la machine 2 au moment du démarrage du moteur 1 ou après suivant l'état de charge de l'Ucap ou de la batterie.

Comme illustré sur la figure 8, un ensemble d'accouplement conforme à un sixième mode de réalisation comprend en outre une unité de transmission 7, comme par exemple une unité de transmission à rapport de réduction variable continûment (ou CVT pour « Continuously Variable Transmission » en anglais), reliant le moteur thermique 1 au compresseur 3. On appellera r le rapport de réduction. On peut ainsi adapter la vitesse de rotation des différents éléments en cours de fonctionnement. En effet, lorsque le moteur thermique 1 fournit une puissance mécanique au compresseur 3, le dispositif 6 étant fermé, on peut adapter le rapport de réduction de l'unité CVT pour maintenir le fonctionnement du compresseur autour d'un point de fonctionnement souhaité. Lorsque le moteur thermique 1 est arrêté le moteur électrique 2 prend le relais en fermant le dispositif 8.

Les engrenages pourront être remplacés par des galets sans pour autant sortir du cadre de la présente invention.

Il convient de noter que les dispositions des différents modes de réalisation décrits ci-dessus peuvent également être avantageusement combinées entre elles.

## Revendications

1. Ensemble d'accouplement entre un moteur thermique (1) et un compresseur (3) d'une unité de climatisation d'un véhicule automobile, comprenant :
- une machine électrique tournante (2) pouvant fonctionner en mode moteur;
- des premiers moyens d'accouplement débrayables (6) adaptés pour coupler le compresseur au moteur thermique ; et,
- des seconds moyens d'accouplement débrayables (8) adaptés pour coupler le compresseur (3) à la machine électrique tournante (2),
ledit ensemble étant **caractérisé en ce que** ladite machine électrique (2) est un démarreur dudit moteur thermique, ledit ensemble étant configuré avec une commande adapté pour faire fonctionner la machine électrique tournante par à-coups successifs pendant des phases où ladite machine électrique est accouplée au compresseur (3) et les premiers moyens d'accouplement (6) sont ouvert.

2. Ensemble d'accouplement selon la revendication 1, **caractérisé en ce que** le moteur électrique a une puissance inférieure ou égale à 1.5kW.

3. Ensemble d'accouplement selon l'une quelconque des revendications précédentes, dans lequel les premiers moyens d'accouplement (6) débrayables et les seconds moyens d'accouplement (8) débrayables sont commandables de manière indépendante.

4. Ensemble d'accouplement selon l'une quelconque des revendications précédentes, dans lequel la machine électrique tournante (2) est adaptée pour être disposée de manière accolée à l'unité de climatisation du véhicule.

5. Ensemble d'accouplement selon l'une quelconque des revendications précédentes, dans lequel la machine électrique tournante (2) est adaptée pour être couplée au moteur thermique (1) par l'intermédiaire d'une unité de transmission (7).

6. Ensemble d'accouplement selon l'une quelconque des revendications précédentes, dans lequel la machine électrique tournante (2) est adaptée pour être reliée au compresseur (3) par l'intermédiaire d'une unité de transmission (7).

7. Ensemble d'accouplement selon la revendication 5 ou la revendication 6, dans lequel l'unité de transmission (7) comprend au moins l'un des dispositifs suivants : un train épicycloïdal, une transmission à rapport de réduction fixe, une transmission à rapport de réduction continuellement variable, une boîte de vitesses.

8. Véhicule ayant un moteur thermique (1) et une unité de climatisation avec un compresseur (3), comprenant une unité d'accouplement selon l'une quelconque des revendications précédentes pour l'accouplement entre ledit moteur thermique (1) et ledit compresseur (3).

9. Procédé de commande d'un ensemble moteur pour un véhicule à moteur thermique, comprenant :
- un moteur thermique (1) pour l'entraînement du véhicule ;
- une machine électrique tournante (2) définissant un démarreur dudit moteur thermique ;
- un compresseur (3) d'une unité de climatisation dudit véhicule, ledit procédé comprenant :
- un premier mode de fonctionnement, dans lequel le moteur thermique (1) fournit une puissance mécanique au compresseur (3); et
- un deuxième mode de fonctionnement dans lequel la machine électrique tournante (2), fonctionnant en mode moteur, fournit par à-coups successifs une puissance mécanique au compresseur (3) de manière mécaniquement indépendante du moteur thermique (1).

10. Procédé selon la revendication 9, suivant lequel le procédé comprend les étapes successives consistant à :
(a) fournir une puissance mécanique à partir de la machine électrique tournante (2) au moteur thermique (1) pour démarrer le moteur thermique (1) au moyen de la machine électrique tournante (2);
(b) fournir une puissance mécanique à partir du moteur thermique (1) au compresseur (3);
(c) fournir une puissance mécanique uniquement à partir de la machine électrique tournante (2) au compresseur (3).

11. Procédé selon la revendication 9 ou la revendication 10, suivant lequel l'étape (c) est répétée successivement sur des plages d'une première durée, lesdites plages étant espacées d'une seconde durée sensiblement supérieure à la première durée.

## Patentansprüche

1. Baugruppe zur Kopplung zwischen einer Brennkraftmaschine (1) und einem Kompressor (3) einer Klimaanlage eines Kraftfahrzeugs, die Folgendes umfasst:
- eine drehende elektrische Maschine (2), die im Motormodus arbeiten kann;
- erste ausrückbare Kopplungsmittel (6), die zum Koppeln des Kompressors mit der Brennkraftmaschine ausgelegt sind; und
- zweite ausrückbare Kopplungsmittel (8), die zum Koppeln des Kompressors (3) mit der drehenden elektrischen Maschine (2) ausgelegt sind,
wobei die Baugruppe **dadurch gekennzeichnet ist, dass** die elektrische Maschine (2) ein Anlasser der Brennkraftmaschine ist, wobei die Baugruppe mit einer Steuerung konfiguriert ist, die dazu ausgelegt ist, die drehende elektrische Maschine in aufeinander folgenden Schritten während Phasen arbeiten zu lassen, in denen die elektrische Maschine mit dem Kompressor (3) gekoppelt ist und die ersten Kopplungsmittel (6) offen sind.

2. Kopplungsbaugruppe nach Anspruch 1, **dadurch gekennzeichnet, dass** der Elektromotor eine Leistung, die kleiner oder gleich 1,5 kW ist, besitzt.

3. Kopplungsbaugruppe nach einem der vorangehenden Ansprüche, in der die ersten ausrückbaren Kopplungsmittel (6) und die zweiten ausrückbaren Kopplungsmittel (8) unabhängig steuerbar sind.

4. Kopplungsbaugruppe nach einem der vorangehenden Ansprüche, in der die drehende elektrische Maschine (2) dazu ausgelegt ist, angefügt an die Klimaanlage des Fahrzeugs angeordnet zu werden.

5. Kopplungsbaugruppe nach einem der vorangehenden Ansprüche, in der die drehende elektrische Maschine (2) dazu ausgelegt ist, mit der Brennkraftmaschine (1) durch eine Übersetzungseinheit (7) gekoppelt zu werden.

6. Kopplungsbaugruppe nach einem der vorangehenden Ansprüche, in der die drehende elektrische Maschine (2) dazu ausgelegt ist, mit dem Kompressor (3) durch eine Übersetzungseinheit (7) verbunden zu werden.

7. Kopplungsbaugruppe nach Anspruch 5 oder Anspruch 6, in der die Übersetzungseinheit (7) mindestens eine der folgenden Vorrichtungen umfasst: ein Planetengetriebe, eine Übersetzung mit festem Untersetzungsverhältnis, eine Übersetzung mit stufenlos verstellbarem Untersetzungsverhältnis, ein Getriebe.

8. Fahrzeug mit einer Brennkraftmaschine (1) und einer Klimaanlage mit einem Kompressor (3), mit einer Kopplungseinheit nach einem der vorangehenden Ansprüche für die Kopplung zwischen der Brennkraftmaschine (1) und dem Kompressor (3).

9. Verfahren zum Steuern einer Motorbaugruppe für ein Fahrzeug mit einer Brennkraftmaschine, die Folgendes umfasst:
- eine Brennkraftmaschine (1) für den Antrieb des Fahrzeugs;
- eine drehende elektrische Maschine (2), die einen Anlasser der Brennkraftmaschine definiert;
- einen Kompressor (3) einer Klimaanlage des Fahrzeugs, wobei das Verfahren Folgendes umfasst:
- einen ersten Betriebsmodus, in dem die Brennkraftmaschine (1) mechanische Leistung zum Kompressor (3) liefert; und
- einen zweiten Betriebsmodus, in dem die drehende elektrische Maschine (2), die im Motormodus arbeitet, in aufeinander folgenden Schritten mechanische Leistung zum Kompressor (3) in mechanisch unabhängiger Weise von der Brennkraftmaschine (1) liefert.

10. Verfahren nach Anspruch 9, gemäß dem das Verfahren die aufeinander folgenden Schritte umfasst, die aus Folgendem bestehen:
(a) Liefern von mechanischer Leistung von der drehenden elektrischen Maschine (2) zur Brennkraftmaschine (1) zum Anlassen der Brennkraftmaschine (1) mittels der drehenden elektrischen Maschine (2);
(b) Liefern von mechanischer Leistung von der Brennkraftmaschine (1) zum Kompressor (3);
(c) Liefern von mechanischer Leistung nur von der drehenden elektrischen Maschine (2) zum Kompressor (3).

11. Verfahren nach Anspruch 9 oder Anspruch 10, gemäß dem der Schritt (c) in Bereichen einer ersten Dauer fortlaufend wiederholt wird, wobei die Bereiche von einer zweiten Dauer beabstandet sind, die wesentlich größer als die erste Dauer ist.

## Claims

1. Coupling assembly for coupling a combustion engine (1) and a compressor (3) of a motor vehicle air conditioning unit, comprising:
- a rotary electric machine (2) able to operate in motor mode;
- a first disengageable coupling means (6) designed to couple the compressor to the combustion engine; and
- second disengageable coupling means (8) designed to couple the compressor (3) to the rotary electric machine (2),
the said assembly being **characterized in that** the said electric machine (2) is a starter of the said combustion engine, the said assembly being configured with a control able to make the rotary electric machine operate in successive bursts during phases in which the said electrical machine is coupled to the compressor (3) and the first coupling means (6) are open.

2. Coupling assembly according to Claim 1, **characterized in that** the electric motor has a power less than or equal to 1.5 kW.

3. Coupling assembly according to either one of the preceding claims, in which the first disengageable coupling means (6) and the second disengageable coupling means (8) can be operated independently.

4. Coupling assembly according to any one of the preceding claims, in which the rotary electric machine (2) is designed to be positioned so that it is hard up against the vehicle air conditioning unit.

5. Coupling assembly according to any one of the preceding claims, in which the rotary electric machine (2) is designed to be coupled to the combustion engine (1) via a transmission unit (7).

6. Coupling assembly according to any one of the preceding claims, in which the rotary electric machine (2) is designed to be connected to the compressor (3) via a transmission unit (7).

7. Coupling assembly according to Claim 5 or Claim 6, in which the transmission unit (7) comprises at least one of the following devices: an epicyclical gear set, a fixed reduction ratio transmission, a continuously variable reduction ratio transmission, a gear box.

8. Vehicle having a combustion engine (1) and an air conditioning unit with a compressor (3) comprising a coupling unit according to any one of the preceding claims for the coupling between the said combustion engine (1) and the said compressor (3).

9. Method for controlling an engine assembly for a combustion engine vehicle, comprising:
- a combustion engine (1) for driving the vehicle;
- a rotary electric machine (2) intended for a starter motor of the said combustion engine;
- a compressor (3) of an air conditioning unit of the said vehicle, the said method comprising:
- a first mode of operation, in which the combustion engine (1) provides the compressor (3) with mechanical power; and
- a second mode of operation in which the rotary electric machine (2), operating in motor mode, provides mechanical power in successive bursts to the compressor (3) in a way that is mechanically independent of the combustion engine (1).

10. Method according to Claim 9, whereby the method comprises the successive steps of:
(a) supplying a mechanical power from the rotary electric machine (2) to the combustion engine (1) in order to start the combustion engine (1) using the rotary electric machine (2);
(b) supplying a mechanical power from the combustion engine (1) to the compressor (3);
(c) supplying a mechanical power only from the rotary electric machine (2) to the compressor (3).

11. Method according to Claim 9 or Claim 10, whereby step (c) is repeated successively over ranges lasting for a first duration, said ranges being spaced apart by a second duration significantly longer than the first duration.
